# EUROPÄISCHE PATENTSCHRIFT

(11) **EP 1 022 636 B1**
(45) Veröffentlichungstag und Bekanntmachung des Hinweises auf die Patenterteilung: **29.09.2004**
(21) Anmeldenummer: 00100601.4
(22) Anmeldetag: 13.01.2000
(51) Int. Cl.: G05D 23/13

(54) **Mischarmatur mit Einhebelbedienung**
Single handle mixing valve
Robinet mélangeur avec un levier de commande unique

(30) Priorität: 19.01.1999 DE 19901853
(43) Veröffentlichungstag der Anmeldung: 26.07.2000
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- EP-A- 0 775 954
- WO-A-90/12351
- FR-A- 2 424 459
- US-A- 4 286 749

## Beschreibung

Die Erfindung geht aus von einem Thermostatventil, bei dem mit Hilfe eines ersten Bedienelements eine Solltemperatur eingestellt werden kann, während mit einem zweiten Bedienelement die Menge des austretenden Wassers bestimmt werden kann. Bei einem bekannten Ventil dieser Art ändert sich mit Öffnung des Ventils auch die Temperatur in einer Weise, dass bei Öffnen des Ventils zunächst kaltes Wasser ausströmt.

Es ist bereits eine Mischarmatur mit Einhebelbetätigung bekannt (WO 90/12351). Bei dieser Armatur wird beim Öffnen zunächst eine direkte Verbindung zwischen dem Kaltwassereinlass und dem Auslass hergestellt, die später wieder geschlossen wird. Der Verstellbereich, in dem diese direkte Verbindung wirksam ist, ist sehr klein.

Der Erfindung liegt die Aufgabe zugrunde, ein Thermostatventil weiter zu verbessern.

Zur Lösung dieser Aufgabe schlägt die Erfindung eine Mischarmatur mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Wird das von der Erfindung vorgeschlagene Ventil mit dem einzigen Hebel geöffnet, so fließt zunächst unabhängig von der Stellung des Thermostaten kaltes Wasser aus dem Auslass. Damit wird sowohl ein Schutz gegen zu hohe Temperaturen als auch eine Energieersparnis erreicht.

In Weiterbildung der Erfindung kann vorgesehen sein, dass das Steuersystem derart ausgebildet ist, dass bei Beginn der Öffnungsbewegung der Einlass für das kalte Wasser vor dem für das warme Wasser geöffnet wird. Diese Maßnahme unterstützt das Verhalten des Ventils.

In Weiterbildung der Erfindung kann vorgesehen sein, dass die direkte Verbindung zwischen dem Einlass für kaltes Wasser und dem Mischwasserauslass parallel zu der Verbindung über das Thermostatventil besteht. Da der Strömungswiderstand durch das Thermostatventil bei entsprechender Gestaltung der direkten Verbindung größer als der Strömungswiderstand durch diese gemacht werden kann, kann dafür gesorgt werden, dass das kalte Wasser zu Beginn der Öffnung ausschließlich durch die direkte Verbindung zu dem Auslass fließt. Durch die Gestaltung der direkten Verbindung kann auch dafür gesorgt werden, dass ein fließender Übergang zwischen der direkten Verbindung und der Verbindung durch das Thermostatventil erfolgen kann.

Die Erfindung schlägt vor, die Steuerung ggf. derart auszubilden, dass bei fortschreitender Öffnungsbewegung des Steuersystems die direkte Verbindung wieder geschlossen wird. Dabei kann insbesondere vorgesehen sein, dass die direkte Verbindung allmählich geschlossen und die Verbindung über das Thermostatventil allmählich geöffnet wird.

Das Steuersystem weist Steuerscheiben auf, beispielsweise eine feststehende und eine verdrehbare Steuerscheibe, wobei durch mehr oder weniger weite Überdeckung von Öffnungen in den Steuerscheiben Verbindungen hergestellt und geschlossen werden können. Erfindungsgemäß ist vorgesehen, dass die direkte Verbindung durch eine seitliche Ausnehmung der Mischwasseröffnung in der feststehenden Steuerscheibe bewirkt wird.

Es kann vorgesehen sein, dass das Voreilen der Öffnung des Einlasses für das kalte Wasser durch eine unsymmetrische Anordnung der Einlassöffnung in der feststehenden Steuerscheibe bewirkt wird.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Axialschnitt durch eine Mischarmatur nach der Erfindung;
- Fig. 2: eine Stirnansicht der Mischarmatur;
- Fig. 3: eine Aufsicht auf die bewegbare Steuerscheibe;
- Fig. 4: einen Schnitt durch die bewegbare Steuerscheibe der Figur 3;
- Fig. 5: eine Aufsicht auf die bewegbare Steuerscheibe aus der entgegengesetzten Richtung;
- Fig. 6: eine Aufsicht auf die feststehende Steuerscheibe aus der Richtung der bewegbaren Steuerscheibe;
- Fig. 7: einen Schnitt durch die feststehende Steuerscheibe der Figur 6;
- Fig. 8: schematisch die gegenseitige Anordnung der beiden Steuerscheiben bei geschlossenem Ventil;
- Fig. 9: eine der Fig. 8 entsprechende Darstellung zu Beginn der Öffnungsbewegung;
- Fig. 10: eine entsprechende Ansicht bei fortschreitender Öffnungsbewegung;
- Fig. 11: eine Darstellung bei fast vollständig geöffnetem Ventil

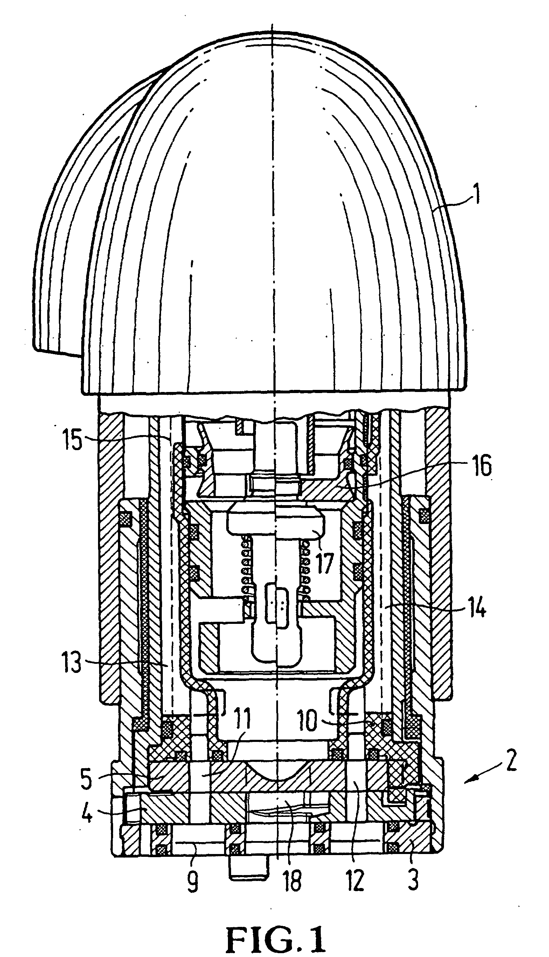

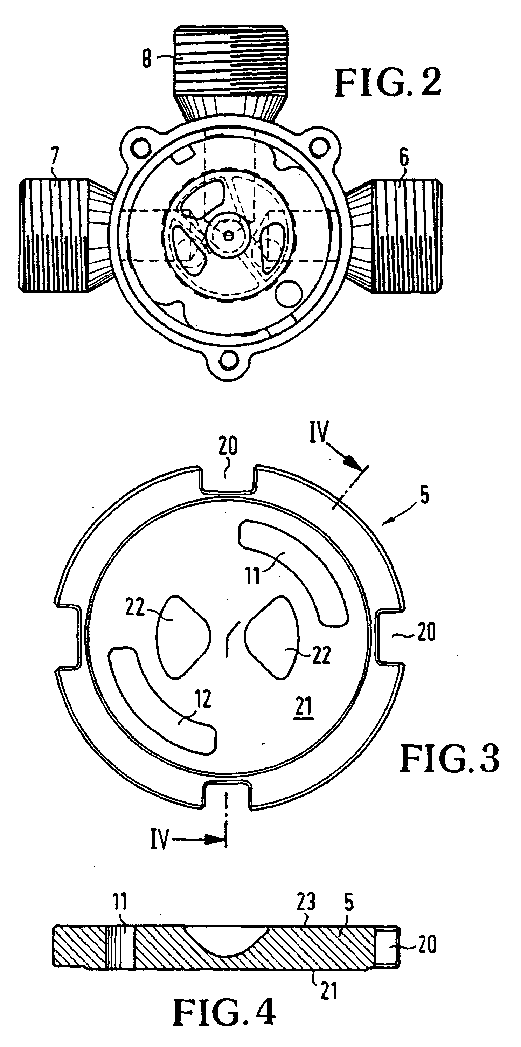

Figur 1 zeigt einen Axialschnitt durch eine Thermostatarmatur, wie sie von der Erfindung vorgeschlagen wird. Die Armatur enthält einen Griff 1, mit dem die Menge des aus der Armatur austretenden Wassers bestimmt werden kann. In dem Gehäuse ist ein Steuersystem 2 angeordnet, das oberhalb des Bodens 3 eine feststehende Steuerscheibe 4 und darüber eine verdrehbare Steuerscheibe 5 aufweist. Die dargestellte Armatur wird in einen Grundkörper eingesetzt, der in Ansicht in Figur 2 dargestellt ist. Der Grundkörper enthält einen Anschluss 6 für kaltes Wasser, einen Anschluss 7 für warmes Wasser und einen Anschluss 8 für Mischwasser. Die Anschlüsse stehen mit dem Kartuschenboden 3 in Verbindung. Der Kartuschenboden 3 hat drei Öffnungen 9, die mit den entsprechenden Anschlüssen verbunden sind. Durch Verdrehen des Griffs 1 wird mit Hilfe des Verteilers 10 die bewegbare Steuerscheibe 5 verdreht. Die bewegbare Steuerscheibe 5 enthält eine Öffnung 11 für kaltes Wasser und eine Öffnung 12 für warmes Wasser. Die beiden Öffnungen 11, 12 führen über entsprechende Kanäle 13, 14 zu den beiden schlitzartigen Einlässen 15 des Thermostatventils 16. Das Thermostatventil 16 enthält einen Ausdehnungskörper 17, der von dem Mischwasser beeinflusst wird und die Stellung des Thermostatventils 16 regelt. Das Mischwasser wird zentral durch den Verteiler 10 geleitet und verlässt diesen durch eine Mischwasseröffnung der bewegbaren Steuerscheibe 5. Aus der Mischwasseröffnung der bewegbaren Steuerscheibe 5 gelangt das Mischwasser in die Mischwasseröffnung 18 der feststehenden Steuerscheibe 4 und von dort zu dem Mischwasserausgang 8 der Armatur. Bei der gerade erwähnten Verdrehung der bewegbaren Steuerscheibe 5 mit Hilfe des Verteilers 10 wird gleichzeitig auch die Solltemperatur des Thermostaten 16 verändert.

Die Einzelheiten der Steuerung sind in den folgenden Figuren dargestellt. Zunächst wird auf die Figuren 3 bis 5 verwiesen, die die bewegbaren Steuerscheibe 5 darstellen. Fig. 3 zeigt eine Ansicht der bewegbaren Steuerscheibe von unten in Figur 1, so dass die Fläche zu sehen ist, die auf der feststehenden Steuerscheibe 4 aufliegt. Die Steuerscheibe 5 weist an ihrem Umfang vier Kerben 20 auf, die unterschiedliche Breiten enthalten. Die Kerben 20 dienen einerseits zur Mitnahme der Steuerscheibe 5 bei der Verdrehung des Griffs 1, andererseits aber auch dazu, die korrekte Position der Steuerscheibe in dem Verteiler 10 zu gewährleisten.

Die Öffnungen 11, 12 für das kalte und warme Wasser sind als bogenförmige Schlitze ausgebildet, die sich über etwas weniger als einen Viertelkreis erstrecken. Die Anordnung der beiden Öffnungen 11, 12 ist punktsymmetrisch gegenüber dem Mittelpunkt der Steuerscheibe 5.

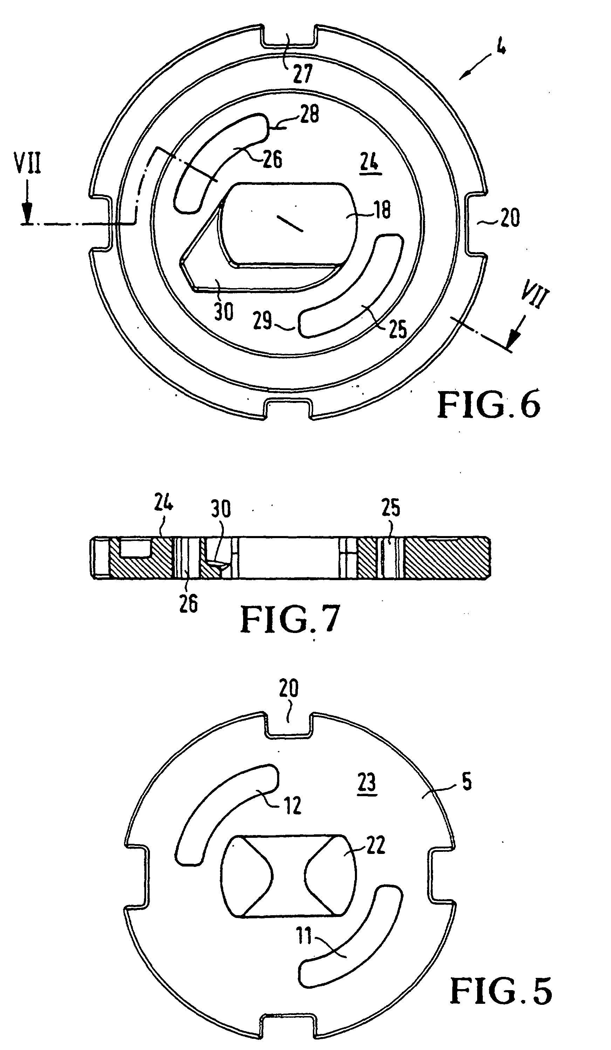

In der dargestellten Stirnfläche 21 münden zwei Öffnungen 22, die auf der gegenüberliegenden in Figur 5 zu sehenden oberen Fläche 23 der Steuerscheibe in eine einzige Öffnung übergehen. Bei den Öffnungen 22 handelt es sich um den Mischwasserauslass aus dem Thermostatventil 16. Die Steuerscheibe 5 ist derart an dem Verteiler 10 befestigt, dass die Öffnungen 11, 12 mit den Einlassöffnungen 15 des Thermostatventils in Verbindung stehen, während der Ausgang aus dem Thermostatventil 16 mit den Öffnungen 22 in Verbindung steht.

Fig. 4 zeigt einen abgewinkelten Schnitt etwa längs Linie IV-IV in Figur 3. Dabei ist die Steuerfläche 21 unten dargestellt, so dass die Öffnungen 22 nicht als durchgehende Öffnung zu sehen sind. Die zu dieser Steuerscheibe gehörende feststehende Steuerscheibe ist in den Figuren 6 und 7 dargestellt. Die feststehende Steuerscheibe zeigt eine gewisse Ähnlichkeit zu der bewegbaren Steuerscheibe 5. Sie enthält an ihrem Umfang ebenfalls vier Kerben 20 unterschiedlicher Breite, die dazu dienen, das korrekte Einsetzen der Steuerscheibe zu gewährleisten. Figur 6 zeigt die Ansicht der Steuerscheibe von oben in Figur 1, d.h. die sichtbare Fläche 24 ist die Fläche, die mit der in Fig. 3 sichtbaren Fläche 21 der bewegbaren Steuerscheibe 5 in Verbindung steht. Die feststehende Steuerscheibe enthält eine Einlassöffnung 25 für kaltes Wasser und eine diametral angeordnete Einlassöffnung 26 für warmes Wasser. Beide Öffnungen 25, 26 sind als bogenförmige Schlitze ausgebildet, die sich über etwas weniger als einen Viertel Kreis erstrecken. Jedoch ist in diesem Falle die Anordnung nicht punktsymmetrisch zu dem Mittelpunkt. Die Öffnung 26 für das heiße Wasser weist von der durch den Mittelpunkt gehenden Durchmesserlinie 27 einen Abstand 28 auf, der größer ist als der entsprechende Abstand 29 der Öffnung 25 für das kalte Wasser.

Die Form der Auslassöffnung 18 für das Mischwasser entspricht zunächst in etwa der Form der Öffnung 22, wie sie in Figur 5 zu sehen ist. Jedoch enthält die Öffnung eine seitliche Ausnehmung 30, die sich von einer Ecke der ovalen Öffnung 18 radial nach außen erstreckt. Diese Ausnehmung ist auch in dem Schnitt der Figur 7 zu sehen, die einen abgewinkelten Schnitt etwa längs Linie VII-VII in Fig. 6 darstellt. Hier ist die Steuerfläche 24 oben angeordnet, entsprechend der Darstellung der Figur 1.

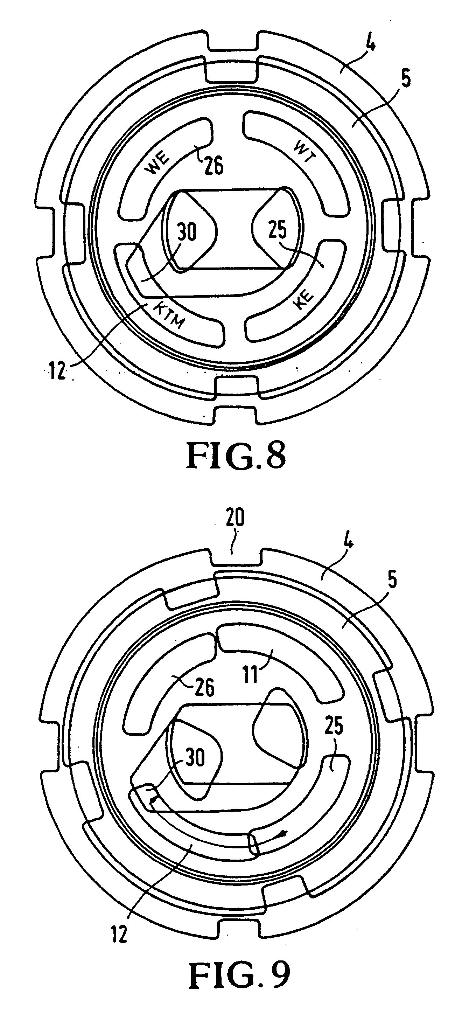

Nun zu den Figuren 8 bis 11, die die Wirkungsweise der von der Erfindung vorgeschlagenen Armatur näher erläutern. Wie bereits bei der Figur 1 erwähnt, gelangt das Wasser durch die Öffnungen 9 des Kartuschenbodens 3 zu der feststehenden Steuerscheibe, und kann von dort je nach Stellung der bewegbarren Steuerscheibe zu den Öffnungen des Thermostatventils und/oder der Auslassoffnung fließen. Fig. 8 zeigt nun die gegenseitige Position der beiden Steuerscheiben in dem Fall, dass das Ventil geschlossen ist. Die Einlassöffnung für kaltes Wasser 26 und die Einlassöffnung 27 für warmes Wasser werden von der Steuerfläche 21 der bewegbaren Steuerscheibe 5 vollständig verschlossen. Die seitliche Ausnehmung 30 der feststehenden Steuerscheibe 4 steht in Verbindung mit der Kaltwasseröffnung der bewegbaren Steuerscheibe 5, was jedoch keine Wirkung erzeugt, da in das Ventil kein Wasser gelangen kann.

Die Position der bewegbaren Steuerscheibe 5 in Figur 8 wird durch einen Anschlag der Armatur als die geschlossene Position festgehalten. Eine Öffnung des Ventils ist nur in einer Richtung möglich, nämlich dadurch, dass die bewegbare Steuerscheibe 5 in Fig. 8 im Gegenuhrzeigersinn verdreht wird. Diese Position ist in Figur 9 dargestellt, wobei, wie man aus der Position der Kerben erkennen kann, eine Verdrehung um etwa 15 erfolgt ist. In dieser Position steht die Einlassöffnung 25 der feststehenden Steuerscheibe mit der jetzt etwas verdrehten Einlassöffnung 12 der bewegbaren Steuerscheibe 5 in Verbindung, da sich die beiden Öffnungen etwas überschneiden. Das kalte Wasser kann also aus der feststehenden Steuerscheibe in die bewegbare Steuerscheibe 5 fließen, und von dort auch zu dem Thermostatventil 16. Jedoch steht in dieser Position die Kaltwasseröffnung 12 der bewegbaren Steuerscheibe noch in Verbindung mit der seitlichen Ausnehmung 30 der Mischwasseröffnung. Dadurch kann das kalte Wasser direkt zum Auslass fließen.

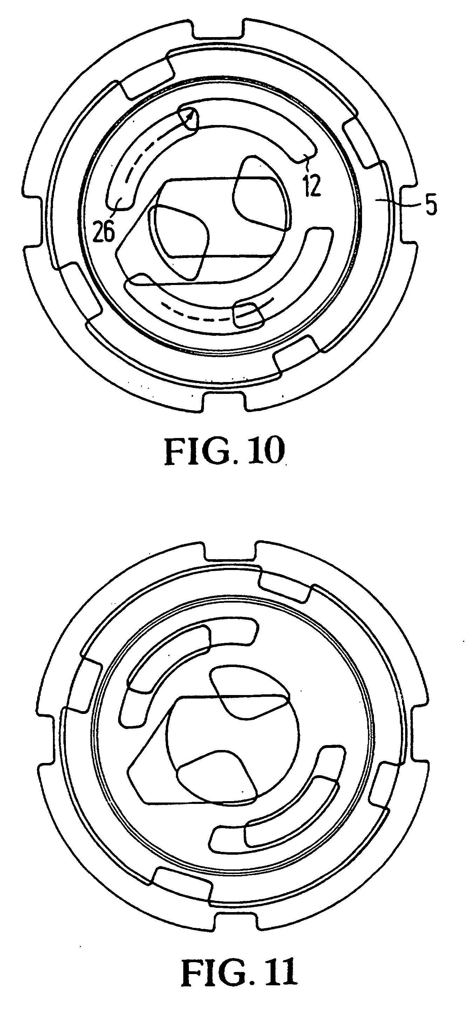

Da die Öffnung 26 für das warme Wasser in der feststehenden Steuerscheibe versetzt angeordnet ist, siehe Figur 6, besteht noch keine Verbindung zwischen dem Einlass 26 für warmes Wasser und dem Warmwassereinlass 11 für das Thermostatventil. Erst bei einer nochmaligen Drehung der bewegbaren Streuerscheibe 5, siehe Figur 10, kann auch das warme Wasser aus der Öffnung 26 durch die Öffnung 12 zum Thermostatventil fließen. In dieser Position wird die direkte Verbindung für das kalte Wasser schon fast geschlossen. Bei der Weiterdrehung der bewegbaren Steuerscheibe 5 in die in Fig. 11 dargestellte Position ist die direkte Verbindung vollständig geschlossen, so dass das kalte Wasser auch vollständig durch das Thermostatventil 16 fließen muss.

## Patentansprüche

1. Mischarmatur mit Einhebelbedienung, mit
1.1 einem Einlass für kaltes Wasser,
1.2 einem Einlass für warmes Wasser,
1.3 einem Thermostatventil (16),
1.4 einem Mischwasserauslass, sowie mit
1.5 einem Steuerscheiben aufweisenden Steuersystem (2) zur Verbindung von Einlässen und Auslass über das Thermostatventil (16), wobei
1.6 das Steuersystem (2) derart ausgebildet ist, dass bei Beginn seiner Öffnungsbewegung eine direkte Verbindung zwischen dem Einlass für kaltes Wasser und dem Mischwasserauslass hergestellt wird,
**dadurch gekennzeichnet, dass**
1.7 die direkte Verbindung durch eine seitliche Ausnehmung (30) der Mischwasseröffnung (18) in der feststehenden Steuerscheibe (4) bewirkt wird.

2. Mischarmatur nach Anspruch 1, bei der das Steuersystem (2) derart ausgebildet ist, dass bei Beginn der Öffnungsbewegung der Einlass für das kalte Wasser vor dem Einlass für das warme Wasser geöffnet wird.

3. Mischarmatur nach Anspruch 1 oder 2, bei der die direkte Verbindung parallel zu der Verbindung durch das Thermostatventil (16) besteht.

4. Mischarmatur nach einem der vorhergehenden Ansprüche, bei der das Steuersystem (2) derart ausgebildet ist, dass bei fortschreitender Öffnungsbewegung die direkte Verbindung wieder geschlossen wird.

5. Mischarmatur nach einem der vorhergehenden Ansprüche, bei der das Steuersystem (2) ebene Steuerscheiben (4, 5) aufweist.

6. Mischarmatur nach einem der Ansprüche 2 bis 5, bei der das voreilende Öffnen des Einlasses für das kalte Wasser durch eine unsymmetrische Anordnung der Einlassöffnungen (25, 26) in der feststehenden Steuerscheibe (4) bewirkt wird.

## Claims

1. A mixer plumbing fixture having
1.1 an inlet for cold water,
1.2 an inlet for hot water,
1.3 a thermostatic valve (16),
1.4 an outlet for mixed hot and cold water, and
1.5 a control system (2) for connecting the inlets to the outlet via the thermostatic valve (16) that has control disks, where
1.6 the control system (2) is configured such that a direct connection between the inlet for cold water and the outlet for mixed hot and cold water will be generated upon commencement of its opening motion,
**characterized in that**
1.7 the direct connection is effected by a lateral recess (30) on the aperture (18) in the fixed control disk (4) for transmitting mixed hot and cold water.

2. A mixer plumbing fixture according to claim 1, wherein the control system (2) is configured such that the inlet for cold water and the inlet for hot water open upon commencement of its opening motion.

3. A mixer plumbing fixture according to claim 1 or claim 2, wherein the direct connection exists in parallel with the connection through the thermostatic valve (16).

4. A mixer plumbing fixture according to any of the foregoing claims, wherein the control system (2) is configured such that the direct connection will be closed when the opening motion is continued.

5. A mixer plumbing fixture according to any of the foregoing claims, wherein the control system (2) has planar control disks (4, 5).

6. A mixer plumbing fixture according to any of claims 2 - 5, wherein the leading opening of the inlet for cold water is effected by an asymmetric arrangement of the inlet apertures (25, 26) in the fixed control disk (4).

## Revendications

1. Robinet mélangeur avec un levier de commande unique, avec
1.1 une admission pour eau froide,
1.2 une admission pour eau chaude,
1.3 un robinet thermostatique (16),
1.4 une sortie d'eau mitigée, ainsi qu'avec
1.5 un système de réglage (2) présentant des disques de réglage en vue de la communication des admissions et de la sortie via le robinet thermostatique (16),
1.6 le système de réglage (2) étant réalisé de telle manière qu'au début de son mouvement d'ouverture, une communication directe est établie entre l'admission pour eau froide et la sortie d'eau mitigée,
**caractérisée par le fait que**
1.7 la communication directe est obtenue grâce à un creux latéral (30) de l'orifice d'eau mitigée (18) dans le disque de réglage fixe.

2. Robinet mélangeur selon la revendication 1, pour laquelle le système de réglage (2) est réalisé de telle manière qu'au début de son mouvement d'ouverture, l'admission pour eau froide est ouverte avant l'admission pour eau chaude.

3. Robinet mélangeur selon la revendication 1 ou 2, pour laquelle la communication directe existe parallèlement à la communication via le robinet thermostatique (16).

4. Robinet mélangeur selon l'une quelconque des revendications précédentes, pour laquelle le système de réglage (2) est réalisé de telle manière qu'en poursuivant le mouvement d'ouverture, la communication directe est de nouveau fermée.

5. Robinet mélangeur selon l'une quelconque des revendications précédentes, pour laquelle le système de réglage (2) présente des disques de réglage plans (4, 5).

6. Robinet mélangeur selon l'une quelconque des revendications 2 à 5, pour laquelle l'ouverture en avance de l'admission pour eau froide est provoquée par un agencement dissymétrique des orifices d'admission (25, 26) dans le disque de réglage fixe (4).
